# EUROPEAN PATENT APPLICATION

(11) **EP 3 397 030 A1**
(43) Date of publication of application: **31.10.2018**
(21) Application number: 17167849.3
(22) Date of filing: 24.04.2017
(51) Int. Cl.: H05B 37/02, H05B 33/08

(54) **SYSTEM AND METHOD OF ENERGY SAVING FOR LIGHT EMITTING DIODE EMISSION CIRCUIT USING OPPOSITELY CONNECTED ELECTRODES**

(71) Applicant: Yongbin, Wang, Shenzhen 518045 (CN)
(72) Inventor: Yongbin, Wang, Shenzhen 518045 (CN)

(57) **Abstract**

The present invention includes a system and method of electrically connecting LEDs in parallel along an insulated wire. In use, through an electrically connected microcontroller, the LEDs emission circuit of the present invention time alternates between the LED groups connected along the LED emission circuit. In such a system and method, the amount of current required to drive the LED emission circuit while still giving the desired visual display is significantly lower than a standard direct current drive LED emission circuit over the same period of time. The present invention is able to accomplish this objective by allowing only half of the LEDs along the emission circuit to be lit for a significant period of time while the other half of LEDs is dormant, and then switching between lit/dormant states between the two halves of LEDs.

## Description

### Background

Light emitting diodes (alternatively, "LED") positioned along emission circuits, also known as string LEDs, are usually used in a manner requiring them to be displayed or in operation for long periods of time. This can occur during holiday periods, grand openings, gallery showings, etc. Examples of uses of light emitting diodes along emission circuits are for decoration of homes, businesses, retail environments. Other places for light emitting diode emitting circuits include galleries, safety lights, etc. As stated, in many instances, such emission circuits are required to operate for long period of times.

Because LED emission circuits are usually required to operate for significant time periods, an alternating voltage source is usually required. This allows the LED emission circuit to operate for long periods without worry for the power source. However, because of the usual requirement for an alternating voltage source to be hard connected to the load, such as via a socket, the use of LED emission circuits was not possible in remote locations. For example, it was not possible to use an LED emission circuit in a remote environment such as a campsite if the LED emission circuit required an alternating voltage source.

Battery operated LED emission circuits are well-known in the art. However, battery operated LED emission circuits are not suitable for long use as the power source, which is generally a direct current power source, is limited in amount of power.

This present invention addresses the problems of the prior art, as will be discussed below.

### Summary

The present invention relates to a system and method of operation of an energy saving light emitting diode (LED) emission circuit, also known as LED string. The light emitting diodes of the emission circuit are oppositely connected vis-à-vis adjacent LEDs and controlled by a Controller Module.

Through the present invention, the energy required to drive the LED emission circuit is significantly reduced, allowing direct current power to drive the LEDs for a long period of time.

The present invention includes a system and method of electrically connecting LEDs in parallel along an insulated wire. In use, through an electrically connected microcontroller, the LEDs emission circuit of the present invention time alternates between the LED groups connected along the LED emission circuit. In such a system and method, the amount of current required to drive the LED emission circuit while still giving the desired visual display is significantly lower than a standard direct current drive LED emission circuit over the same period of time. The present invention is able to accomplish this objective by allowing only half of the LEDs along the emission circuit to be lit for a significant period of time while the other half of LEDs is dormant, and then switching between lit/dormant states between the two halves of LEDs.

In order to achieve the object of the present invention, LEDs on the emission circuit are oppositely connected vis-à-vis the LED to its immediate left and right. Power is provided to the emission circuit by way of a Controller Module, the Controller Module being connected to a DC Power Source, a timer mechanism, and a lit/dormant state circuit. The Controller Module is configured to make certain LEDs along the emission circuit lit while other LEDs along the emission circuit remain dormant, and then make those LEDs that were dormant lit, and those LEDS that were lit, dormant.

### Brief Description of Drawings

FIG 1 shows a schematic of light emitting diode emission circuit according to the present invention.
FIG 2 shows a schematic of the light emitting diode emission circuit plus Controller Module of the present invention.
FIG 3 shows a method of operation of the system of the present invention.
FIG 4 shows an example of the present invention, where in one group of LEDs is lit, while the other is dormant, the LEDs being lit for an extended period of time.

### Description

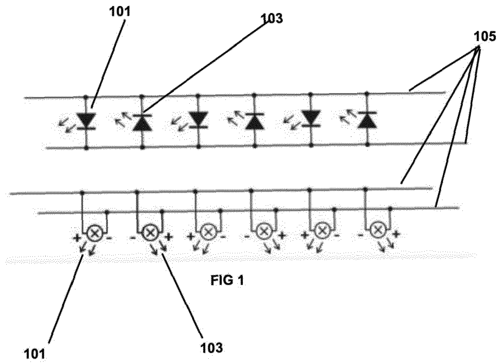

Referring to FIG 1, a schematic diagram of a light emitting diode emission circuit of the present invention. The light emitting diode emission circuit includes light emitting diodes (101, 103) electrically connected to an insulated wire (105), wherein the light emitting diodes (101, 103) are connected in an opposite manner, meaning the anode and cathode of LED 101 are connected in an opposite manner to the anode and cathode of LED 103.

The anode and cathode for the LED next to LED 103 is then connected in an opposite manner to the anode and cathode of LED 103, and so forth and so on down the emission circuit 105.

The number of LEDs along the LED emission circuit can be based on industry standard LED emission circuits, for example 25 LEDs along the emission circuit, 50 LEDs along the emission circuit, 100 LEDs along the emission circuit, 150 LEDs, or 200 LEDs.

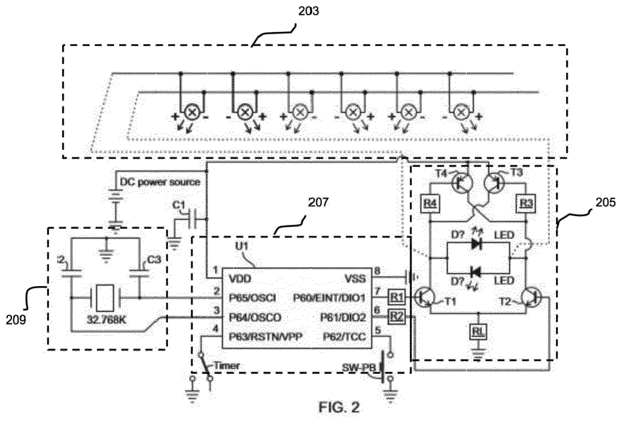

FIG 2 shows a schematic of the system of the present invention, including the light emitting diode emission circuit plus Controller Module. The Controller Module includes a multi-pin microcontroller 207, a direct current power source 201, a resistance transmission circuit 205, all electrically controlled to the light emitting diode emission circuit 203 of the present invention, wherein the light emitting diode emission circuit 203 includes LEDs oppositely attached vis-à-vis adjacent neighboring LEDs.

LEDs suitable for use in the emission circuit 203 can be selected from industry conventional colors and wavelengths, including infrared, red, orange, yellow, green, blue, purple, ultraviolet, pink, and white.

The mode of operation of the system 200 is as follows: the system 200 of the present invention is driven by a direct current (DC) power source 201, such as battery power or solar cells. The DC power source 201 is electrically connected to the multi-pin microcontroller 207. As shown in the schematic, in a preferred embodiment the micro-controller 207 can be 8 pins.

The microcontroller 207 has as its purpose the initiation of the visual LED exhibition (via the LEDs) (which occurs by turning on and turning off the system), setting the modes of the visual LED exhibition, wherein the mode of the visual LED exhibition can include "power off", flashing LEDs, wave LEDs exhibition, fading LEDs, twinkle/flashing LEDs exhibition, "steady on" LEDs, chasing/flashing LEDs, or a combination of the modes. According to the present invention, because half of the LEDs along the emission circuit 203 in use at a specific time, that half of the LEDs that are lit are the LEDs that exhibit the mode. In one embodiment, and as shown in FIG 2, a 5^{th} pin on the microcontroller is electrically connected to the "SW-PB" switch (mode switch/power switch). The default mode of the system of the present invention is "power off".

Alternating between the two LED halves occurs by the resistance transmission circuit 205. The resistance transmission circuit 205 is electrically connected to the microcontroller 207 and the LED emission circuit 203. The resistance transmission circuit 205 directs one of 2 signals from the microcontroller 207 through its circuitry, being directed throughout either resistance R1 or resistance R2. In one embodiment, and as shown in FIG 2, the resistance transmission circuit 205 use an H-bridge circuit, such H-bridge circuit being defined as an electric circuit that enables a voltage to be applied in two directions. The direction of the signal through R1 or R2, after transmitting through the resistance transmission circuit 205, determines which half of the LED group along the LED emission circuit 203 is lit and which half is dormant. As will be discussed below, the direction of the signal through R1 or R2 is switched according to a pre-set extended time period.

The Controller Modular 200 also includes an electronic oscillator circuit 209, whereby the electronic oscillator circuit 209 is electrically connected to the microcontroller 207. Through the electronic oscillator circuit 209 the modes of the LED emission circuit 203 are enabled within the two groups of LEDs. As previously discussed, the mode of the LED emission circuit 203 are only visually displayed by the lit LEDs of the emission circuit 203. In one embodiment, and as shown in FIG 2 , the electronic oscillator circuit 209 is a crystal oscillator which serves as a clock so that the microcontroller 207 can control the frequency between the first LED group and the second LED group. In a preferred embodiment, the frequency is about 40 Hz, with the pre-set extended time period being about 0.025 seconds. In use, the frequency relates to which group of LEDs is showing the current mode.

In a further embodiment, and as shown in FIG 2, the microcontroller 207 is electrically connected to a timer via one of its pins. In use, the timer applies "start/stop" control the signal transmission from the microcontroller to the resistance transmission circuit 205. For example, after 6 hours of "start" (whereby signals are transmitted by the microcontroller), signal transmission will "stop" for 18 hours. In one embodiment, the "start/stop" cycle operates in a manner of from about 6 hours to 8 hours start / 18 hours to 16 hours stop, with a complete start / stop cycle equaling 24 hours.

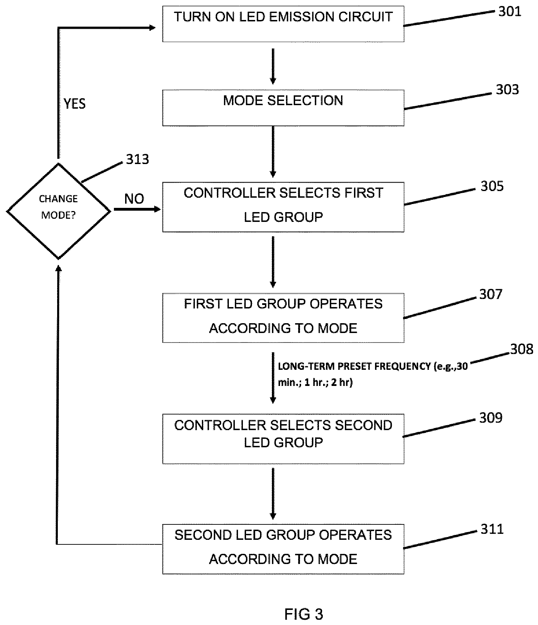

FIG 3 is an embodiment of the method of the present invention, whereby through the system of the present invention, the system is first turned on 301. As stated above, the system derives power from a direct current power source. In a preferred embodiment, the DC power source is a battery.

The mode of the visual light display is selected by a user 303. As stated, the mode of the visual light display will be shown only by the lit LEDs on the emission circuit, of which the lit LEDs are one half of all the LEDs on the emission circuit.

Following the selection of the mode 203, the microcontroller selects the first group of LEDs to visual exhibit the mode. In one embodiment, the selection of the first group of LEDs is pre-set- meaning the first group is preset into the microcontroller.

The selected first group of LEDs then operates according to the mode 307, while the second group of LEDs goes dormant. The operation of the mode 307 on the first group of LEDs occurs for an extended period of time 308, for example from 30 minutes to 2 hours.

Following the extended period of time 308, the microcontroller then selects the second group of LEDs to visual exhibit the mode 309. The second group of LEDs visually exhibit the mode for the same extended period of time as the first group of LEDs, while the first group of LEDs goes dormant.

After the second group of LEDs completes the visually exhibited mode for the extended period of time, a user may select to change the visually exhibited mode 313. If the user elects Not to change the mode, the first group of LEDs will then visually exhibit the previous mode, while the second group of LEDs lies dormant. If the user elects Yes to change the mode, the first group of LEDs will visually exhibit a new mode, while the second group of LEDs les dormant.

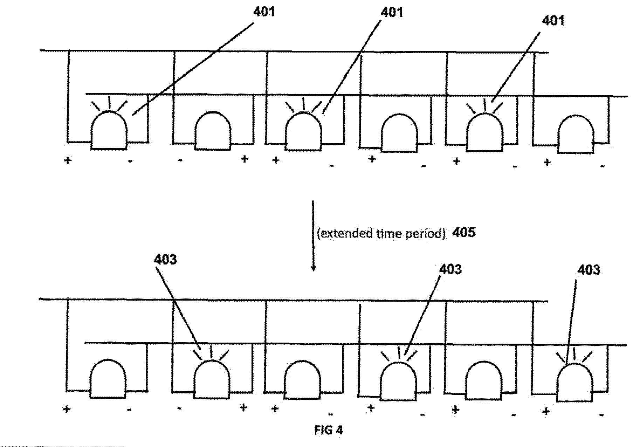

FIG 4 shows the embodiment of the present invention, whereby in operation one group of LEDs along an emission circuit is lit 401 while the other LEDs remain dormant. After an extended time period 405, the previously dormant LEDs 403 visually exhibit the mode, while the previously lit LEDs goes dormant.

## Claims

1. A system of an energy saving light emitting diode emission circuit, comprising:
- a light emitting diode emission circuit having a number of light emitting diodes connected in parallel, whereby a light emitting diode is connected in an opposite anode to cathode manner from the immediate adjacent light emitting diodes on the left and the right of said light emitting diode, wherein said number of light emitting diodes are operationally divided into two groups;
- a resistance transmission circuit electrically connected to said light emitting diode emission circuit;
- a microcontroller electrically connected to said resistance transmission circuit;
- an electronic oscillator circuit electrically connected to said microcontroller;
- a direct current power source; and
- a timer.

2. The system of claim 1, wherein said direct current power source is selected from the group consisting of battery and solar cell.

3. The system of claim 1, wherein said direct current power source is a battery.

4. The system of claim 1, wherein said number of light emitting diodes connected in parallel number from 25 to 200 light emitting diodes.

5. The system of claim 1, wherein a first light emitting diode in the emission circuit is electrically connected by its anode to a wire one and electrically connected by its cathode to a wire two, and a second light emitting diode in the emission circuit is electrically connected by its cathode to said wire one and electrically connected by its anode to said wire two.

6. The system of claim 1, wherein said resistance transmission circuit has two alternative paths for the transmission of an electrical signal from said microcontroller to said light emitting diode emission circuit.

7. The system of claim 1, wherein said microcontroller is an 8-pin microcontroller.

8. The system of claim 1, further comprising a timer electrically connected to said microcontroller.

9. The system of claim 6, wherein said resistance transmission circuit is an H-bridge circuit.

10. The system of claim 1, further comprising one or more operation modes selected from the group consisting of "power off", flashing LEDs, wave LEDs exhibition, fading LEDs, twinkle/flashing LEDs exhibition, "steady on" LEDs, chasing/flashing LEDs, or a combination thereof.

11. The system of claim 1, wherein said electronic oscillator circuit is a crystal oscillator suitable for conducting frequency switching between said two groups of light emitting diodes.

12. The system of claim 11, wherein said frequency switching is about 40Hz.

13. The system of claim 1, wherein said timer operates to control the micro-controller in a "start/stop" cycle, where in "start" said microcontroller transmits signals from about 6 hours to about 8 hours, and in "stop" said microcontroller ceases to transmit signals from between about 18 hours to 16 hours, whereby the "start/stop" cycle equals 24 hours.

14. A method of visually exhibiting a light emitting diode display, comprising the steps of:
- activating a light emitting diode display system, wherein said system has a light emitting diode emission circuit, a controller, and a direct current power source;
- selecting a mode of operation of the light emitting diode emission circuit;
- said controller electing a first light emitting diode group, wherein said first light emitting diode group is within said emission circuit;
- operating said first light emitting diode group in accordance with said selected mode;
- operating said first light emitting diode group for an extended period of time;
- electing a second light emitting diode group by said controller, wherein said second light emitting diode group is within said emission circuit and whereas said first light emitting diode group is made dormant; and
- operating said second light emitting diode group in accordance with said selected mode for an extended period of time.

15. The method of visually exhibiting a light emitting diode display of claim 14, wherein operating said first light emitting diode group for an extended period of time comprises operating said first light emitting diode group for a period of about 0.025 seconds.

16. The method of visually exhibiting a light emitting diode display of claim 14, wherein operating said second light emitting diode group in accordance with said selected mode for an extended period of time comprises operating said second light emitting diode group from a period of 0.025 seconds.

17. The method of visually exhibiting a light emitting diode display of claim 14, whereby said modes are selected from the group consisting of "power off', flashing LEDs, wave LEDs exhibition, fading LEDs, twinkle/flashing LEDs exhibition, "steady on" LEDs, chasing/flashing LEDs, or a combination thereof.

18. A system for visually exhibiting a light emitting diode display, comprising a controller module and an emission circuit, wherein said controller module operates by
- activating a light emitting diode display system;
- selecting a mode of operation for said emission circuit;
- said controller electing a first light emitting diode group, wherein said first light emitting diode group is within said emission circuit;
- operating said first light emitting diode group in accordance with said selected mode;
- operating said first light emitting diode group for an extended period of time;
- electing a second light emitting diode group by said controller, wherein said second light emitting diode group is within said emission circuit and whereas said first light emitting diode group is made dormant; and
- operating said second light emitting diode group in accordance with said selected mode for an extended period of time;
and said emission circuit has a number of light emitting diodes connected in parallel, whereby a light emitting diode is connected in an opposite anode to cathode manner from the immediate adjacent light emitting diodes on the left and the right of said light emitting diode.

19. The system of claim 18, wherein said controller module is powered solely by a battery.

20. The system of claim 18, wherein a first light emitting diode in said emission circuit is electrically connected by its anode to a wire one and electrically connected by its cathode to a wire two, and a second light emitting diode in said emission circuit is electrically connected by its cathode to said wire one and electrically connected by its anode to said wire two.
